# EUROPÄISCHE PATENTANMELDUNG

(11) **EP 3 461 381 A2**
(43) Veröffentlichungstag der Anmeldung: **03.04.2019**
(21) Anmeldenummer: 18000771.8
(22) Anmeldetag: 28.09.2018
(51) Int. Cl.: A47J 37/07

(54) **GRILLVORRICHTUNG MIT SEITLICH VERSETZTER BRENNKAMMER**

(30) Priorität: 29.09.2017 DE 102017009104
(71) Anmelder: Mahrwald, Jürgen, Dr., 18273 Güstrow (DE)
(72) Erfinder: Mahrwald, Jürgen, Dr., 18273 Güstrow (DE)
(74) Vertreter: Schulz, Manfred

(57) **Zusammenfassung**

Die Erfindung betrifft eine Grillvorrichtung für das direkte Grillen mit Holzkohle ab bzw. oberhalb einer Temperatur von 200 °C.

Die Grillvorrichtung besteht aus einem Gehäuse (1) und zeichnet sich dadurch aus, dass das Gehäuse (1) wenigstens einen Mantelkörper (2) aufweist, der eine als Kamin ausgebildete Brennkammer (3) umschließt und mit einem Grillraum (4), wobei die Brennkammer (3) und der Grillraum (4) seitlich versetzt nebeneinander in dem Gehäuse (1) angeordnet sind, wobei die Brennkammer (3) seitlich zum Grillraum (4) eine Öffnung (5) aufweist, durch die die Wärmestrahlung und das Rauchgas der verbrennenden Holzkohle (6) durch den Grillraum (4) so geleitet werden, dass Wärmestrahlung und Rauchgas über einen Grillrost (7), der den Grillraum (4) abdeckt, nach oben abgeleitet werden.

## Beschreibung

Die Erfindung betrifft eine Grillvorrichtung für das direkte Grillen mit Holzkohle ab bzw. oberhalb einer Temperatur von 200 °C Grilltemperatur. Derartige Vorrichtungen sind hinlänglich bekannt. Regelmäßig befindet sich die für das Grillen notwendige Holzkohle in einem Raum direkt unter dem Grillrost, auf dem das Grillgut zum Garen angeordnet wird. Nachteilig daran ist, dass herabtropfendes Fett auf die Holzkohle tropft, wodurch Dämpfe entstehen, die zum Teil schädlich bzw. gesundheitsgefährdend sein können.

Zur Definition des Erfindungsgegenstandes werden zunächst folgende erläuternde Begriffe beschrieben. Das Grillen ist ein Braten in Wärmestrahlung. Wärmeleitung und Konvektion spielen nur eine untergeordnete Rolle. Je nach Temperaturbereich wird diese Garmethode unterschiedlich bezeichnet.

Beim direkten Grillen wird durch Strahlungswärme und bei sehr hoher Temperatur (über 200 °C) gegart, indem das Grillgut in der Nähe der Hitzequellen platziert wird, was zu einen schnellen Krustenbildung beiträgt. Bei richtigem Grillen bleibt der größte Teil des Saftes im Grillgut erhalten. Das Grillgut wird dabei gleichzeitig gebräunt. Dies erfolgt durch die Karamellisierung fleischeigener Stoffe und ist geschmacksbildend. Beim Grillen über Holzkohleglut werden zusätzlich durch die Rauchgase geschmacksändernde / -verbessernde Stoffe in das Grillgut eingebracht. Aus diesem Grunde ist diese traditionelle Grillart weit verbreitet und gilt als das eigentliche "echte" Grillen.

Demgegenüber wird beim indirekten Grillen das Grillgut in einem geschlossenen Behälter bei niedrigeren Temperaturen (130 bis 200°C) gegart. An der Oberfläche des Grillgutes bildet sich keine Kruste. Der Hauptvorteil des indirekten Grillens besteht darin, dass auch dickes Grillgut gleichmäßig gegart wird, weil die Hitze ausreichend Zeit hat, ins Innere vorzudringen. Das indirekte Grillen ist jedoch kein eigentliches Grillen. Bei Erreichen einer Temperatur von 100° verkocht ausgetretener Fleischsaft. Dadurch wird das Grillgut gedämpft und nicht gegrillt. Dieses meint ein Garen in trockener Luft. Demzufolge gibt es einen Qualitätsunterschied beim indirekten und beim direkten Grillen.

Ergänzend wird folgendes ausgeführt. Den Gartemperaturen beim Grillen sind Fachbegriffe zugeordnet. Grundsätzlich gibt es für das Garen von Lebensmitteln unter Anwesenheit von Rauchgasen folgende Einteilung:

| | |
|---|---|
| 30° - 60° | Kalträuchern |
| 60° - 90° | Heißräuchern |
| 90° - 160° | Barbecue (Smoker) |
| 130° - 220° | indirektes Grillen |
| 200 ° - 260° | direktes Grillen |

Die Temperaturspannen schwanken je nach Quelle etwas. Jedoch ist die 200°-Grenze genau fixiert. Sie ist sogar Bestandteil einer europäischen Norm. In der DIN EN 1860-1 wird für Grillgeräte gefordert, dass deren mittlere Temperatur am zentralen Punkt des Grillrostes mindestens 200 °C betragen müsse. Auf Seite des 17 der DIN EN 1860-1 heißt es dazu: "die Brennstoffladung muss eine mittlere Temperatur von 200° für eine Dauer von 20 Minuten (beginnend, wenn in der Mitte eine Temperatur von 200° erreicht ist) erzeugen, die in einem zentralen Punkt durch ein Thermoelement gemessen wird.

In der DIN EN 1860-1 werden die benutzten Begriffe eingangs definiert. Wichtig für uns ist die Unterscheidung in "geschlossenes Grillgerät" und in "offenes Grillgerät". Auf der Seite 5 dieser DIN unten ist ausgeführt:

### "3.1.2.

### geschlossenes Grillgerät

für die Anwendung im Freien vorgesehenes Gerät zum Garen durch Strahlungs- und Konvektionswärme, das mindestens aus einem Brennstoffbehälter, einem Deckel, gegebenenfalls mit Lufteinlassöffnungen, und einem Grillrost und/oder einem drehbaren Spieß besteht.

### 3.1.3.

### offenes Grillgerät

für die Anwendung im Freien vorgesehenes Gerät zum Garen durch Strahlungswärme, das mindestens aus einem Brennstoffbehälter und einem Grillrost und/oder einem drehbaren Spieß besteht."

Die Geräte unterscheiden sich eigentlich im Wesentlichen nur dadurch, ob ein Deckel vorhanden ist oder nicht. Damit ändert sich die Grillmethode:
Geschlossenes Grillgerät → Indirektes Grillen (wasserdampfgesättigte Rauchgase)
Offenes Grillgerät → direktes Grillen (trockene Rauchgase)

Das Anwendungsgebiet der Erfindung ist das direkte Grillen bei Temperaturen ab bzw. oberhalb von 200°C. Die Energiequellen für die Erzeugung der Wärmestrahlung sind Holzkohle, Strom oder Heizgas. In allen Fällen kann aus dem Fleisch austretendes Fett in die Glut, auf die Heizwendel oder andere heiße Stellen tropfen und dort zu krebserregendem Benzpyren, Nitrosaminen oder ähnlichen Stoffen gewandelt werden. Diese Substanzen gehören zu den polyzyklischen aromatischen Kohlenwasserstoffen (PAK). Sie gelten als Schadstoffe und sind teilweise krebserregend. Ihre Konzentration in Lebensmitteln unterliegt Grenzwerten. Das wird überwacht. Direktes Grillen gilt somit ganz allgemein als gesundheitsgefährdend.

Das Problem der Gesundheitsgefährdung beim Grillen durch abtropfendes Fett und nachfolgender Bildung krebserregender Stoffe ist seit langem bekannt. Die einfachste Lösung, um dies zu verhindern, ist eine Verringerung der Gartemperatur (z.B. Ablöschen mit Bier). Die Wirkung der Verdampfungskälte ist jedoch nur temporär und wirkt geschmacksverändernd / -verfälschend.

Entwickelt wurden auch spezielle Grillroste, welche nicht einfach aus Rundeisen, sondern Winkelprofilen bestehen, welche so montiert und schräg eingebaut wurden, dass Ablaufrinnen entstanden, welche einen Großteil des abtropfenden Fettes aufnehmen. Zwischen den Ablaufrinnen muss jedoch ein Spalt freigelassen werden, um den Kontakt der Rauchgase mit dem Grillgut weiterhin zu ermöglichen. Um vollständige Tropffreiheit zu erlangen, wird eine zweite Ebene gleichfalls mit Winkelprofilen eingebaut. Der technische Auswand ist dann enorm. Da die Ablaufrinnen gleichzeitig als Kühlrippen wirken, ist eine höhere Energiezufuhr notwendig. Diese ist nur mit Gasbrennern sicher zu erreichen.

Dann gibt es eine Lösung, bei denen sich eine wassergefüllte Schale direkt unter dem Grillgut befindet und sich die glühenden Holzkohlen um diese Wasserschale herum befinden. Die ganze Anordnung befindet sich unter einer geschlossenen Haube/Deckel (indirektes Grillen). Bei dieser Art zu Grillen wird ständig Wasser verdampft und damit die Grilltemperatur gesenkt. Außerdem wird die Luft wasserdampfgesättigt und damit das Geschmackserlebnis verfälscht / verändert.

Im Geschmack sind diese Neuerungen mit dem Original nicht vergleichbar. Es fehlt ein Anteil von trockenen Holzkohlerauchgasen. Geschmacklich bleibt das direkte Grillen mit Holzkohle unerreicht.

Bei den Grillgeräten wird beim Einsatz von Holzkohle oft ein Kamineffekt genutzt: Bei der Verbrennung erhitzen sich Rauchgase, werden leichter und steigen auf. Findet eine solche Verbrennung in einem Rohr statt, welches nur unten und oben geöffnet ist, entsteht im Rohr ein Sog. Dieser wird üblicherweise als Schomsteinzug bzw. Kamineffekt bezeichnet und führt dazu, dass am Schornstein angeschlossene Feuerungsanlagen mit ausreichenden Mengen an Frischluft versorgt werden. Das Feuer wird durch den Kamineffekt regelrecht angefacht.

Eine Regelung bzw. Verringerung der Grilltemperatur ist mit vielen Geräten nicht möglich, sondern erfolgt nur durch die eingefüllte Holzkohlemenge. Bei anderen Holzkohlegrills ist eine Reduzierung der Luftzufuhr möglich. Dies führt zu einer unvollständigen Verbrennung der Rauchgase und damit zu einer anderen Zusammensetzung und wirkt geschmacksverfälschend.

Des Weiteren gibt es Vorrichtungen, bei denen die Energiezufuhr seitlich erfolgt.

Dies hat sich mit Gasheizung bei Hähnchengrillgeräten und Dönerspießgrillgeräten durchgesetzt. In beiden Fällen muss jedoch das Grillgut nicht nur ab und zu gewendet, sondern ständig gedreht werden. Dafür sind Drehvorrichtungen mit Motoren und Untersetzungsgetrieben notwendig. Diese Lösungen sind technisch aufwendig und teuer.

Andere Grillgeräte mit teilweiser seitlicher Energiezufuhr sind in Südamerika üblich. Die Konstruktionen bestehen aus einem an einem seitlich befestigten Feuerkorb mit weiten Feuerrostabständen, aus dem kleine glühende Holzkohleteile auf den Herdboden fallen und von dort per Hand unter den nebenstehenden waagerechten Grillrost geschoben werden. Es handelt sich somit um eine Kombination von klassischem Grill mit seitlicher Zusatzstrahlungsquelle (z.B. argentinische Barillas).

Bei allen technischen Lösungen mit rein seitlicher Energiezufuhr gibt es einen normal von Frischluft durchströmten Raum zwischen Energiequelle und dem Grillgut. Deshalb wird das Grillgut nur selten von Rauchgasen erreicht und der Geschmack ist nicht so intensiv.

Die einzige Ausnahme von dieser Regel bilden Smoker. Bei diesen sind die Feuerbox und etwas höher angebrachte Garkammer direkt benachbart und rauchgasführend miteinander verbunden. Es werden jedoch nur Räuchertemperaturen erreicht (ca. 100°C). Ein eigentliches Grillen mit den höheren grilltypischen Temperaturen (ab 200°C) findet konstruktionsbedingt nur dann statt, wenn nicht die Feuerbox beheizt wird, sondern sich die Holzkohle direkt in der Garkammer unterhalb des Grillgutes befindet.

Grills werden als Tisch- oder Standgeräte betrieben. Auch bei den Tischgeräten ist der Boden nicht isoliert, so dass die darunter befindliche Fläche stark erwärmt wird. Bei Betrieb im Garten direkt auf dem Boden kann die Grasnarbe irreversibel geschädigt werden. Deshalb haben verschiedene deutsche Städte in Grünanlagen ein generelles Grillverbot erlassen und gestatten das Grillen nur noch auf gesonderten Grillplätzen.

Die derzeitigen Grillgeräte lösen immer nur eines der beiden Probleme. Bislang gibt es kein Gerät, welches ein Grillen mit trockenen Holzkohlerauchgasen und ohne Gesundheitsgefahr durch verbrennendes Fett in der Glut ermöglicht.

Es ist von Nachteil, dass das direkte Grillen mit Holzkohle gesundheitsgefährdend sein kann. Dies geschieht durch das durch das Abtropfen von heißem Fett in die Glut, auf die Heizwendel bzw. die Heizspiralen.

Es ist von Nachteil, wenn die Verringerung der Grilltemperatur mittels Begrenzung der Zuluft Menge erfolgt, da dieses zu einer unvollständigen Verbrennung mit Rauchgasen minderer Geschmacksqualität führt.

Es ist weiterhin von Nachteil, dass durch die Verwendung von Strom und Gas als Heizquelle, die Verwendung von relativ dicht schließenden Hauben / Deckeln, durch das Aufstellen von wassergefüllten Behältern in der Nähe des Grillgutes oder das Ablöschen des Grillgutes mit Bier und ähnlichen Löschmitteln Geschmacksverfälschungen / -veränderungen auftreten können.

Aus dem Stand der Technik ist die Druckschrift US 4 700 618 A bekannt. In dieser Druckschrift wird ein geschlossenes Gargerät mit Deckel vorgestellt. Es handelt sich dabei um einen typischen Smoker für den Temperaturbereich von 90° bis 160 °C. Das Gerät wird mit Holz betrieben, um einen intensiven Rauchgeschmack zu erreichen. Dieser Brennstoff unterscheidet sich von Holzkohle dadurch, dass er mit niedrigerer Temperatur und langer Flamme verbrennt. Selbst, wenn man dieses Gerät mit Holzkohle befeuern würde, würde die notwendige Grillmindesttemperatur von 200°C nicht erreicht werden. Die Strahlung erreicht den Grillrost nur sehr eingeschränkt und die Wärmeverluste am ungedämmten Gerät wären einfach zu groß. Mit dem Gerät kann gar nicht gegrillt werden. Es erreicht nicht die von der DIN EN 1860-1 geforderten 200°C auf dem Grillrost.

Aus der Druckschrift US 3 882 767A ist eine weitere Lösung bekannt, die ebenfalls nicht als Grill bezeichnet werden kann. Das Gerät wird als "automatic cooking apparatus" bzw. als "barbecuing oven" beschrieben. Damit übereinstimmend wird das Gerät mit Holz befeuert und kann die Strahlung den Barbecueraum kaum erreichen. Es wird nur eine barbecue-typische Temperatur von 160° erreicht. Es erreicht nicht die von der DIN EN 1860-1 geforderten 200°C auf dem Grillrost. Des Weiteren ist aus der US 3 343 527A ein Grillgerät mit Deckel bekannt. Dieser Deckel ist notwendig, damit die erwärmte Luft und die Rauchgase nicht entweichen. Es handelt sich um ein geschlossenes Grillgerät für das indirekte Grillen. Also nicht die erwünschten trockene Rauchgase, sondern wasserdampfgesättigte mit Geschmacksbeeinträchtigungen. Kamin und Grillraum sind nicht richtig voneinander getrennt. Die Holzkohle wird nur durch ein Gitter gehalten und strahlt großflächig in den Grill- bzw. Fettabtropfraum hinein. Die Erfahrungen zeigen jedoch, dass sich durch eine zu große Öffnung zwischen Kamin und Grillraum dieser so stark erwärmt, dass abtropfendes Fett den Boden gar nicht mehr erreicht, sondern schon in der Luft entflammt und verzischt. Damit entstehen aber die unerwünschten polyzyklischen aromatischen Kohlenwasserstoffe (PAKs). Durch die Haube werden diese dann noch im Kreislauf gehalten. Die Temperatur ist durch den hohen Strahlungsanteil zu hoch.

Aus der Druckschrift DE 31 38 171 A1 ist eine weitere Lösung bekannt, die ähnlich konstruiert ist, wie die zuvor beschriebenen Lösung. Das Gerät besitzt einen Deckel und ist somit ein geschlossenes Grillgerät für das indirekte Grillen. Es ist außerdem keine klare Trennung zwischen Kamin und Grillraum vorhanden.

Die zuvor beschriebenen Lösungen des Standes der Technik weisen genau die Nachteile auf, die eingangs beschrieben worden sind.

Ein weiterer Nachteil ergibt sich dadurch, dass Grillgeräte nicht wärmeisoliert sind und bei großer Nähe zu Rasenflächen Schäden an der Vegetation verursachen.

Weitere Nachteile der Lösungen des Standes der Technik ergeben sich dadurch, dass beim Grillen genau wie bei vielen anderen Garprozessen Verschmutzungen auftreten. Dieser Verschmutzungen fallen teilweise nicht sonderlich auf, weil durch die hohe Strahlungswärme diese regelrecht wegbrennen. Danach sind dieser Verschmutzungen nur noch als dunkle Flecke zu sehen. Spätestens nach mehrmaligen Grillen muss das Gerät vollständig gesäubert werden, was sehr umständlich ist, da dieses Gerät meist nicht in eine Waschschüssel oder in eine handelsübliche Spülmaschine passt. Deshalb wird oft Reinigungsspray eingesetzt, welches am Gerät haftet und die Ablagerungen löst. Es handelt sich dabei um Chemikalien, die nicht umweltfreundlich sind. Gegebenenfalls vorhandene Rückstände können sich beim nächsten Grillvorgang entzünden. Eventuelle Gesundheitsrisiken sind ebenfalls nicht auszuschließen. Des Weiteren ist es äußerst nachteilig, dass die Grillgeräte nach dem Stand der Technik äußerst umständlich im Ganzen, d. h. am Stück, gereinigt werden müssen.

Aufgabe der Erfindung ist es daher, eine Grillvorrichtung für das Grillen mit Holzkohle vorzuschlagen, die zumindest einen der zuvor beschriebenen Nachteile nicht mehr aufweist.

Die Aufgabe der Erfindung wird gelöst durch eine Grillvorrichtung für das direkte Grillen mit Holzkohle ab bzw. oberhalb einer Grilltemperatur von 200 °C, bestehend aus einem Gehäuse mit wenigstens einem Mantelkörper, der eine als Kamin ausgebildete Brennkammer umschließt und einem Grillraum, wobei die Brennkammer und der Grillraum seitlich versetzt nebeneinander in dem Gehäuse angeordnet sind, wobei die Brennkammer seitlich zum Grillraum eine Öffnung aufweist, durch die die Wärmestrahlung und das Rauchgas der verbrennenden Holzkohle durch den Grillraum so geleitet werden, dass Wärmestrahlung und Rauchgas über einen Grillrost, der den Grillraum abdeckt, nach oben abgeleitet werden. Gelöst wird die Aufgabe der Erfindung demnach durch die Beibehaltung / Wiedereinführung des direkten Grillens mittels trockener Holzkohlerauchgase bei gleichzeitiger Ausnutzung der Wärmestrahlung und das Verhindern des Abtropfens von Fett in das heiße Glutbett durch ein seitliches Versetzen des Grillrostes schräg neben die Holzkohleglut. Dabei stehen Glutbehälter und Grillrost nicht einfach nebeneinander, sondern sind rauchgas- und wärmestrahlungsführend miteinander verbunden. Mit der erfindungsgemäß vorgeschlagenen Lösung ist es im Gegensatz zu den Lösungen des Standes der Technik möglich, das Grillgut ab bzw. oberhalb einer Grilltemperatur von 200 °C zu Grillen. Die im Stand der Technik vorgestellten Lösungen stellen keine Grillvorrichtungen im Sinne der eingangs vorgenommenen Definition im Sinne der DIN EN 1860-1 dar. Vielmehr werden dort Räucher- bzw. Barbecues-Vorrichtungen vorgestellt, mit denen sich nachgewiesenermaßen die erforderlichen Gartemperaturen von mindestens 200 °C oder höher nicht erreichen lassen. Mit der jetzt vorgeschlagenen erfindungsgemäßen Lösung können die Grillstücke mit einer Temperatur von 200 °C und höher gegrillt werden, ohne dass die gesundheitsschädlichen polyzyklischen aromatischen Kohlenwasserstoffe (PAKs) auftreten.

Von Vorteil ist es, wenn der Grillraum in Betriebsstellung im Gehäuse zumindest teilweise höher angeordnet ist als die Brennkammer. Der Effekt der Ausnutzung der Rauchgase in Verbindung mit der Wärmestrahlung wird durch diese Ausgestaltung noch weiter verbessert.

Um eine ausreichend hohe Grilltemperatur zu erreichen, wird der eigentliche Glutraum bzw. die Brennkammer als Kamin ausgeführt und die Verbrennungsluft vorgewärmt. Diese Luftvorwärmung ist gleichzeitig Kühlluft zum Erreichen einer dauerhaft mäßigen Kaminaußentemperatur. Dies wird gemäß einer vorteilhaften Weiterbildung der Erfindung erreicht, indem die Brennkammer mit einer unteren Luftzufuhr und einer oberen Luftzufuhr ausgebildet ist, wobei bevorzugt die obere Luftzufuhr zwischen dem Mantelkörper und der Brennkammer vorgesehen ist und wobei die obere Luftzuführungsöffnung auf der in Betriebsstellung oberen Seite des Mantelkörpers angeordnet ist. Damit werden erfindungsgemäß 2 Effekte erreicht, nämlich das bereits beschriebene Vorwärmen der Verbrennungsluft bei gleichzeitiger Kühlung des Außengehäuses.

Erfindungsgemäß ergeben sich folgende Unterschiede zum Stand der Technik. Der Grillrost steht nicht einfach offen neben dem Glutbehälter und wird von diesem angestrahlt und mit Rauchgasen beaufschlagt, sondern ist oberer Teil eines geschlossenen Behälters. Dieser Grillraum hat eine seitliche Öffnung, durch die die heißen Rauchgase hineinströmen. Die Oberseite des Grillraums ist als Grillrost ausgeführt, durch welches die Rauchgase abziehen können. Das Grillgut wird auf dem Rost von den geschmacksbildenden Rauchgasen umströmt und von der Wärmestrahlung getroffen. Herabtropfendes Fett gelangt auf die Unterseite des Garraumes und wird durch eine Öffnung abgeleitet.

Kaminoberseite und Grillrost bilden in etwa eine Ebene. Die Verringerung der Grilltemperatur erfolgt durch eine Querschnittsverringerung der Öffnung zwischen Kamin und Grillraum (Schieber).

Von besonderem Vorteil ist es dabei, wenn nach einer Weiterbildung der Erfindung die obere Luftzufuhr im unteren Bereich in die Brennkammer geführt ist, sodass die obere Zuluft um die Brennkammer herumgeführt und dabei erwärmt wird. Durch die mantelartige Ausbildung der Brennkammer, die von dem Mantelkörper umschlossen wird, ist gleichzeitig die Kühlung des äußeren Gehäuses gewährleistet.

Entsprechend einer Weiterbildung der Erfindung ist die obere Luftzuführung als Schieber oder Klappe ausgebildet. Erfindungsgemäß wird demnach die Luftzuführung auf der Oberseite der Grillvorrichtung vorgesehen. Ein weiterer Nachteil des Standes der Technik wird damit behoben, nämlich die nicht ausreichende Kühlung der Grillvorrichtung. Damit lässt sich nun auch die Zufuhr von Verbrennungsluft noch besser regeln. Gleichzeitig wird gewährleistet, dass ausreichend Zuluft bzw. Verbrennungsluft beim Angrillen der Grillvorrichtung zugeführt werden kann.

Die erfindungsgemäße Grillvorrichtung ist entsprechend einer Variante der Erfindung mit einer unteren Luftzufuhr ausgestattet. Die untere Luftzufuhr ist nach der Erfindung seitlich unten in Höhe des unteren Kamin- bzw. Brennkammerbodens bzw. leicht darüber an dem Mantelkörper angeordnet. Diese untere Luftzufuhr wird insbesondere beim Anheizen der Grillvorrichtung verwendet. Der Kamineffekt wird dabei insbesondere beim Anheizen ausgenutzt, weil damit der Höhenunterschied zwischen dem Eingang der Zuluft und dem Ausgang der Rauchgase leicht erhöht ist. Ist die erfindungsgemäße Grillvorrichtung ausreichend angeheizt, wird die untere Luftzufuhr geschlossen und die obere Luftzufuhr geöffnet. Um dies zu gewährleisten, ist gemäß einer vorteilhaften Weiterbildung der Erfindung auch die untere Luftzufuhr mit einer als Schieber oder Klappe ausgebildeten Luftzuführungsöffnung versehen. Diese Luftzuführungsöffnung ist nach der Erfindung an dem Mantelkörper der Grillvorrichtung angeordnet.

Die vorliegende Erfindung schlägt demzufolge bereits durch die vorstehenden Ausführungsformen der Erfindung eine Grillvorrichtung vor, welche folgende Vorteile gegenüber dem Stand der Technik aufweist:
- Vereinigung von Grillen mit ausgezeichnetem Geschmackserlebnis und
- Grillen ohne Gesundheitsgefahr,
- Grilltemperaturregelung / -reduzierung bei Gewährleistung einer vollständigen Verbrennung der Holzkohle,
- bei Betrieb eine nur mäßige Außentemperatur aufweist und damit Schonung einer unter der Grillvorrichtung befindlichen Vegetation.

Der Boden des Grillraums ist nach einer Variante der Erfindung erfindungsgemäß leicht geneigt, und zwar vorteilhafterweise von der Brennkammer her seitlich abfallend. Damit kann vom Grillgut abtropfende Flüssigkeit seitlich abfließen.

Um zu verhindern, dass sich abtropfende Flüssigkeit vom Grillgut am Boden des Grillraums sammelt und dann gegebenenfalls verdampft, ist wenigstens eine Abflussöffnung für die abgetropfte Flüssigkeit vorgesehen.

Wie bereits erwähnt, ist zwischen der Brennkammer und dem Grillraum eine Öffnung zur Führung der Wärmestrahlung und des Rauchgases vorgesehen. Diese Öffnung zur Führung der Wärmestrahlung und des Rauchgases erstreckt sich auf der dem Grillraum zugewandten Seite der Brennkammer etwa ab der Mitte bis zur oberen Begrenzung der Brennkammer. Besonders vorteilhaft ist es dabei, wenn die Öffnung zur Verbindung von Brennkammer und Grillraum den Abmaßen des Brennraums entspricht. Dies führt dazu, dass das Rauchgas und die Wärmestrahlung der Holzkohle optimal zum Grillgut geführt werden.

Als weiterer Vorteil hat es sich erwiesen, wenn gemäß einer weiteren Variante der Erfindung die Brennluftzufuhr sich auf der von dem Grillraum abgewandten Seite befindet. Damit wird erreicht, dass das Rauchgas und die Wärmestrahlung optimal zum Grillgut geleitet werden. Günstig ist es auch, wenn der untere Kamin- bzw. Brennkammerboden im Bereich der Brennluftzufuhr nach oben abgewinkelt ist. Dies dient insbesondere der Erhöhung der Stabilität des Brennkammerbodens. Eine weitere vorteilhafte Ausgestaltung der Erfindung sieht vor, dass an der oberen Begrenzung der Brennluftzufuhr eine sich bis in den Brennraum hinein erstreckende Abwinklung als Kohleauflageblech bzw. oberer Kamin- bzw. Brennkammerboden vorgesehen ist. Damit wird vorteilhafterweise erreicht, dass die Luftzuführungsöffnung ausreichend groß ist und nicht von der Holzkohle verschlossen wird. Als besonderer Vorteil hat es sich erwiesen, wenn dabei dieser obere Kamin- bzw. Brennkammerboden Luftzuführungsöffnungen aufweist bzw. als Lochblech ausgebildet ist. Die Ausgestaltung der Öffnungen spielt dabei eine untergeordnete Rolle. Sie können beispielsweise als normale Bohrung oder aber auch als Langlöcher ausgeführt sein.

Ein weiterer Aspekt der Erfindung besteht darin, dass ein Schieber in der Öffnung zwischen der Brennkammer und den Grillraum vorgesehen ist, um den Abzug von Wärmestrahlung und Rauchgas aus der Brennkammer zum Grillraum zu begrenzen. Damit ist die Regelung des Garprozesses nun komplett und äußerst komfortabel möglich. Ein Verbrennen des Grillgutes kann damit komplett verhindert werden.

Als Ergänzung und insbesondere zur Erhöhung der Bequemlichkeit beim Einfüllen von Holzkohle ist ein einschiebbares und herausnehmbares Einfüllblech vorgesehen. Dieses Einfüllblech wird nach dem Herausnehmen des Grillrosts in Art einer schiefen Ebene durch den Grillraum zur Brennkammer geführt. Die Holzkohle kann danach bequem auf das Blech geschüttet werden. Wenn sich ausreichend Holzkohle oder Holzkohlebriketts in der Brennkammer befinden, wird das Einfüllblech wieder herausgenommen und der Grillrost wieder auf den Grillraum aufgelegt.

Eine vorteilhafte Weiterbildung der Erfindung schlägt vor, dass die Grillvorrichtung aus Einzelteilen gebildet ist, die formschlüssig zusammensetzbar und wieder auseinander dem sind. Damit lässt sich die Grillvorrichtung sehr leicht montieren und wieder demontieren. Ein weiterer Vorteil ist auch, dass sich durch die leichte Montierbarkeit und Demontierbarkeit die Einzelteile sehr leicht reinigen lassen, indem sie beispielsweise in eine Spüle oder in einer Spülmaschine einlegbar sind. Dort lassen sich entweder händisch oder maschinell sehr einfach reinigen. In Zeiten, in denen nicht so oft gegrillt wird, lässt sich die erfindungsgemäße Grillvorrichtung in demontierten Zustand sehr platzsparend lagern.

Gemäß eines Aspekts der Erfindung, wie zuvor beschrieben, sind als Einzelteile flächige, erste Blechteile und flächige zweite Blechteile vorgesehen, die im montierten Zustand rechtwinklig zueinanderstehen, wobei die ersten Blechteile in regelmäßigen Abständen Laschen aufweisen, die in Schlitze eines zu verbindenden zweiten Blechteiles einsteckbar sind. Die Laschen und Schlitze sind dabei so angeordnet, dass sie für den Einbauzustand korrespondierend zueinander vorgesehen sind, sodass eine einfache Montage möglich ist. D. h. jeweils an der Stelle wo auf dem zweiten Blechteil ein Schlitz vorgesehen ist, befindet sich korrespondierend dazu auf dem zu verbindenden, ersten Blechteil eine Lasche.

Der Formschluss wird dadurch erreicht, dass an der Lasche in Höhe des zu verbindenden zweiten Blechteiles eine Nut vorgesehen ist, die in etwa genauso stark ausgeführt ist, wie die Blechstärke des zweiten Bleches.

Von Vorteil ist es weiterhin, wenn die Schlitze bauchig ausgeführt sind, wodurch die Montage vereinfacht wird.

Eine Variante der zuvor beschriebenen Lösung schlägt vor, dass die Lasche des ersten Bleches als Haken vorgesehen ist, in welchen ein Sicherungsblech einsetzbar ist. Dadurch gelingt es, der gesamten Konstruktion der Grillvorrichtung die notwendige Stabilität zu verleihen.

Kurz zusammengefasst lässt sich die Erfindung wie folgt beschreiben:
Die Grillvorrichtung ist als Holzkohlekamin ausgeführt.
- Konstruktiv ähnlich einem handelsüblichen Holzkohleanzündkamin, bei dem die Holzkohle nicht nur einfach nur offen brennt, sondern durch den Kamineffekt angefacht wird.
- Boden und Oberseite sind geschlossen.
- Der Kamin ist auf einer Seite unten für die Zuluft geöffnet und auf der gegenüberliegenden Seite ab Mitte bis oben für die Rauchgasableitung geöffnet.

Die Grillvorrichtung umfasst einen Mantelbehälter
- Dieser umschließt den Holzkohlekamin fast allseitig.
- Der Hohlraum zum innenliegenden Holzkohlekamin ist luftführend. Er dient der Kaminzuluftvorwärmung und der Kühlung des Holzkohlekamins.
- Er hat eine obere und eine untere Zuluftklappe.

Die Grillvorrichtung umfasst des Weiteren einen Grillraum.
- Der Grillraum ist gleichfalls ein geschlossener Behälter und befindet sich direkt neben dem Holzkohlekamin. Er ist mit diesem rauchgasführend verbunden.
- Die Oberseite ist als Grillrost ausgeführt.
- Die Unterseite (Tropfenauffang- und Ableitblech) ist nicht waagerecht ausgeführt, sondern vom Holzkohlekamin leicht abfallend, um die Strahlung und damit die Erwärmung des Bleches gering zu halten. Es ist am entferntesten Punkt gelocht / durchbrochen, um den Fettaustritt an einer tiefsten Stelle zu ermöglichen.
- Ein wesentlicher Vorteil der erfindungsgemäßen Lösung besteht darin, dass die zwei Hauptprobleme beim Grillen gleichzeitig gelöst werden: Einerseits kann für ein besonderes Geschmackserlebnis mit trockenen Holzkohlegasen gegrillt werden und andererseits besteht keine Gefahr mehr, dass austretendes Fett in die Glut abtropft. Dieses tropft stattdessen daneben auf ein kühles bzw. nur mäßig warmes Blech, welches sich längs zur Strahlungsquelle befindet und deshalb von dieser kaum beaufschlagt und nur gering erwärmt wird.
- Der Grillkamin ist doppelwandig ausgeführt. Bei richtiger Bedienung (untere Frischluftzufuhrklappe geschlossen und obere geöffnet), wird die erwärmte Luft im Kühlmantel nach unten zur Frischluftöffnung des Holzkohlebehälters gesaugt und somit für das Feuer vorgewärmt. Der Kühlmantel bleibt überwiegend nur warm. Dies betrifft auch dessen Unterseite, welche sich über dem Boden befindet. Das Tischgerät kann auch auf Rasenflächen betrieben werden, ohne dass es zu den sonst üblichen Schäden durch Verbrennungen kommt.
- Ein weiterer Vorteil liegt darin, dass das Gerät durch die Nutzung der Kühlluft als vorgewärmte Zuluft für die Feuerung sehr energieeffizient ist. Das Gerät kann somit sehr klein ausgeführt werden und mit einer geringen Holzkohlemenge sogar als Tischgerät unter einem handelsüblichen Dunstabzug in einer Küche innerhalb von Gebäuden betrieben werden.
- Ein besonderer weiterer Vorteil besteht darin, dass die Grillvorrichtung aus Einzelteilen gebildet ist, wodurch eine sehr leichte Zusammensetzbarkeit und Demontierbarkeit gegeben ist. Damit lassen sich die einzelnen Teile nach der Demontage der einfach reinigen. Die gesamte Vorrichtung lässt sich sehr platzsparend lagern.

Die Erfindung wird nachfolgend anhand eines Ausführungsbeispiels beschrieben. Mithilfe von 4 Figuren wird der Grillvorgang mittels der erfindungsgemäßen Grillvorrichtung gezeigt und beschrieben. Weitere 6 Figuren zeigen Details der Montierbarkeit bzw. Demontierbarkeit der erfindungsgemäßen Grillvorrichtung. In den Zeichnungen sind gleiche Merkmale mit den gleichen Bezugszeichen versehen, weshalb die nachfolgenden Figuren in einem Block beschrieben werden. Die gezeigte und beschriebene Ausführungsform ist dabei keineswegs einschränkend zu verstehen.

Es zeigen:
- Fig. 1: eine Schnittdarstellung der erfindungsgemäßen Grillvorrichtung während der Einfüllphase,
- Fig. 2: eine Schnittdarstellung erfindungsgemäßen Grillvorrichtung in der Anheizphase,
- Fig. 3: eine Schnittdarstellung der erfindungsgemäßen Grillvorrichtung im Betrieb bei voller Leistung,
- Fig. 4: eine weitere Schnittdarstellung der erfindungsgemäßen Grillvorrichtung in Betrieb mit reduzierter Leistung bzw. eingeschobenen Schieber in die Öffnung zwischen der Brennkammer und dem Grillraum und
- Fig. 5 bis 10: Prinzipdarstellungen der Montierbarkeit und Demontierbarkeit der aus Einzelteilen gebildeten, erfindungsgemäßen

### Grillvorrichtung.

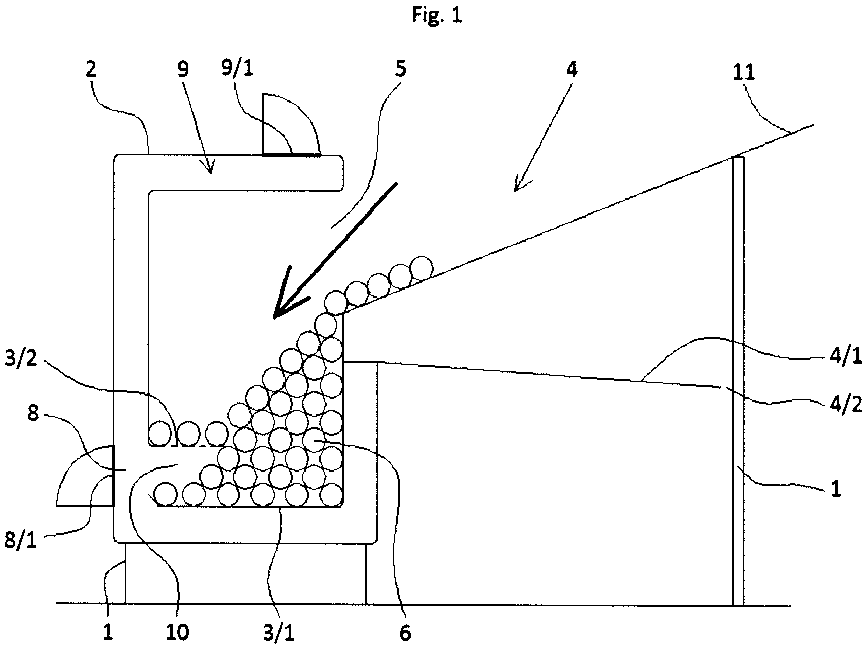

Das Gehäuse 1 umfasst einen Mantelkörper 2 der die als Kamin ausgebildete Brennkammer 3 umschließt. Seitlich versetzt neben der Brennkammer 3 befindet sich der Grillraum 4. Zwischen der Brennkammer 3 und dem Grillraum 4 ist die Öffnung 5 angeordnet, die während des Betriebs zur Durchführung von Wärmestrahlung und Rauchgas aus der Brennkammer 3 zum Grillraum 4 dient. Die Fig. 1 zeigt dabei die Grillvorrichtung in der Einfüllphase. Hierzu ist der Grillrost 7 als obere Abdeckung vom Grillraum 4 herausgenommen und ein Einfüllblech 11 ist schräg von rechts nach links vom Grillraum 4 in die Brennkammer 3 geführt. Über das Einfüllblech 11 gelangt die Grillkohle 6, welche hier nur in Form von Kreisen schematisch dargestellt ist in die Brennkammer 3.

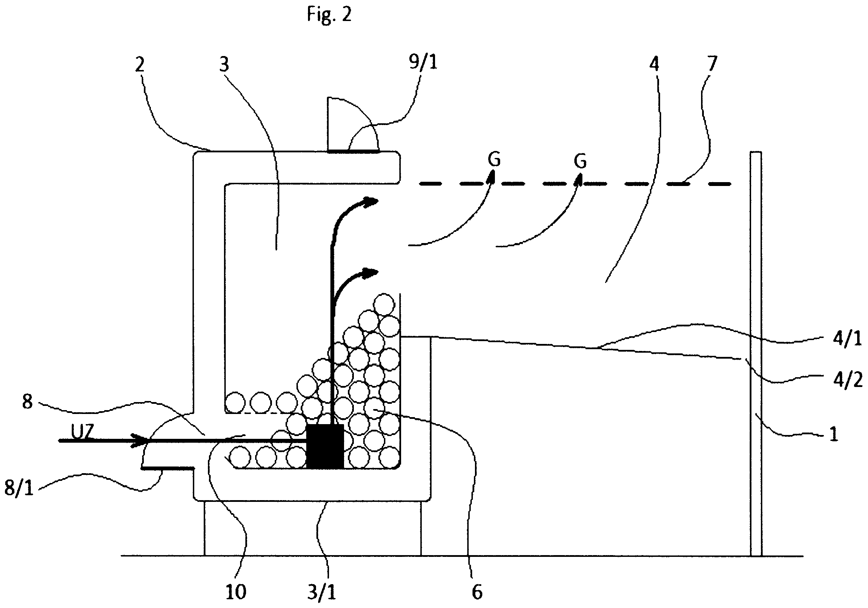

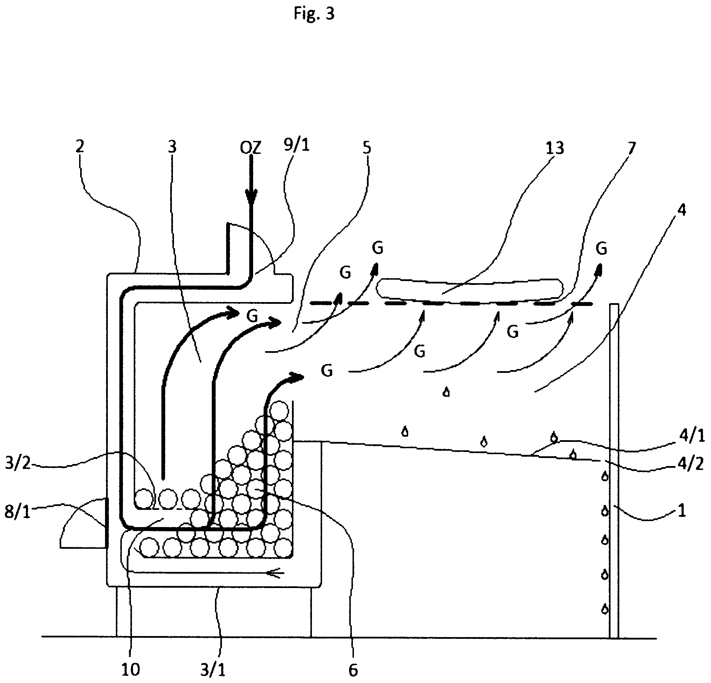

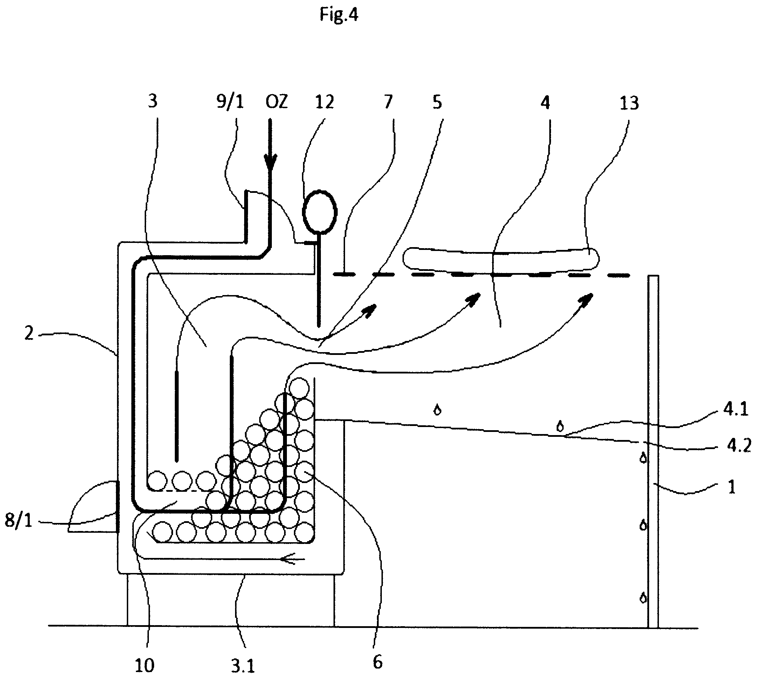

Der Mantelkörper 2 umschließt die Brennkammer 3. Dabei entsteht eine doppelseitige Ausbildung der Brennkammer 3. Zwischen der inneren Wand der Brennkammer 3 und der äußeren Wand des Mantelkörpers 2 befindet sich die obere Luftzufuhr 9. An der oberen Abdeckung des Mantelkörpers 2 ist eine obere Luftzuführungsöffnung 9/1 angeordnet. Diese ist vorteilhafterweise als Schieber oder als Klappe ausgebildet. Damit lässt sich die obere Luftzufuhr 9 regeln bzw. komplett abschließen. Des Weiteren ist eine untere Luftzufuhr 8 vorgesehen, die sich in etwa in Höhe des unteren Kamin- bzw. Brennkammerbodens 3/1 befindet. Auch an der unteren Luftzufuhr 8 befindet sich eine Luftzuführungsöffnung 8/1. Diese untere Luftzuführung 8/1 ist ebenfalls regelbar bzw. komplett verschließbar. Der untere Kamin- bzw. Brennkammerboden 3/1 ist zur Brennluftzufuhr 10 hin leicht nach oben abgewinkelt, um ein Herausfallen von Grillkohle 6 zu verhindern und gleichzeitig die Stabilität des Bodens zu erhöhen. Oberhalb der Brennluftzufuhr 10 befindet sich der obere Kamin- bzw. Brennkammerboden 3/2. Dieser erstreckt sich in die Brennkammer 3 hinein. Vorteilhafterweise ist dieser obere Kamin- bzw. Brennkammerboden 3/2 mit Öffnungen versehen, die der besseren Zufuhr von Brennluft dient. Um zu verhindern, dass sich abtropfen Flüssigkeit während des Grillvorgangs am Boden 4/1 des Grillraum 4 ansammelt, ist eine Abflussöffnung 4/2 auf der rechten Seite des Bodens 4/1 angeordnet. Der Boden 4/1 des Grillraum 4 ist vorteilhafterweise von links nach rechts abfallend ausgebildet. In der Darstellung gemäß der Fig. 2 ist die Anheizphase dargestellt. Dazu ist die obere Luftzuführungsöffnung 9/1 geschlossen und die untere Luftzuführungsöffnung 8/1 geöffnet. Zuvor wurde das Einfüllblech 11 herausgenommen und der Grillrost 7 auf den Grillraum 4 aufgelegt. Mit einem Pfeil und der Bezeichnung UZ ist dargestellt, wie die untere Zuluft in die Brennkammer 3 geführt wird. Die Wärmestrahlung und das Rauchgas G werden über die Öffnung 5 in den Grillraum 4 und dort durch den Grillrost 7 nach oben geleitet. Die Fig. 3 zeigt ebenfalls in einer Schnittdarstellung die erfindungsgemäße Grillvorrichtung während des Betriebs. Dazu wurde die untere Luftzuführungsöffnung 8/1 verschlossen und die obere Luftzuführungsöffnung 9/1 geöffnet. Die obere Zuluft OZ gelangt nun durch die obere Luftzufuhr 9 in dem Zwischenraum zwischen der Brennkammer 3 und dem Mantelkörper 2 durch die Brennluftzufuhr 10 in die Brennkammer 3. Dabei wird sie erwärmt, was der Verbesserung der Energieausnutzung der brennenden Grillkohle 6 dient. Gleichzeitig wird die Außenwand des Mantelkörpers gekühlt bzw. auf einer mäßig warmen Temperatur gehalten. Wie ersichtlich wird auch hier Rauchgas und Wärmestrahlung G zum Grillgut 13 hingeleitet und entweicht dann durch den Grillrost 7 nach oben. Die Fig. 4 zeigt die erfindungsgemäße Grillvorrichtung während des Betriebs mit reduzierter Leistung. Dazu wird in die Öffnung 5 ein Schieber 12 eingeschoben, der die Zufuhr von Rauchgas und Wärmestrahlung begrenzt bzw. reduziert.

Die Grillvorrichtung wird betriebsfertig gemacht, indem es auf eine nichtbrennbare Unterlage gestellt und der Grillrost 7 entfernt wird. Die Holzkohleeinfüllrutsche als Einfüllblech 11 wird in den Kamin gesteckt und danach Grillkohle 6 eingefüllt. Das Einfüllblech 11 wird dann entfernt und der Grillrost 7 wieder platziert.

Die untere Luftzuführungsöffnung 8/1 wird geöffnet, die obere Luftzuführungsöffnung 9/1 geschlossen, Grillanzünder auf dem Boden des Kamins so weit als möglich nach hinten geschoben und dann angezündet. Nach ca. 10 min ist erste Glut im Kamin entstanden und der Kamineffekt funktioniert stabil. Die obere Luftzuführungsöffnung 9/1 wird geöffnet und die untere Luftzuführungsöffnung 8/1 wird geschlossen. Damit zieht der Holzkohlekamin seine Verbrennungsluft aus dem Zwischenraum von Kamin und Mantel, erwärmt sich dabei und kühlt diesen dabei. Nach weiteren 15 min glüht die gesamte Holz- bzw. Grillkohle 6 und das Gerät ist betriebsbereit. Die Energie zum Garen wird als Strahlungsenergie und heißes Rauchgas bereitgestellt. Jetzt kann auf dem Grillrost normal / wie üblich gegrillt werden.

Ist die Grilltemperatur zu hoch oder sollen temperaturempfindliche Stücken wie Fisch oder Gemüse gegrillt werden, kann zur Verringerung der Grilltemperatur der Schieber 12 in die Öffnung 5 als rauchgasführender Verbindung hineingesteckt und je nach Temperaturwunsch höher oder tiefer arretiert werden.

Dadurch, dass eine der beiden Luftzuführungsöffnungen 8/1 bzw. 9/1 geöffnet ist, findet weiterhin eine vollständige Verbrennung der Grillkohle 6 statt.

Das Grillen wird beendet, indem keine Grillkohle 6 mehr nachgefüllt wird und beide Luftzuführungsöffnungen 8/1 und 9/1 geschlossen werden. Nach dem Abkühlen des Kamins wird das Gerät bei offener unterer Luftzuführungsöffnung 8/1 angekippt und dadurch Holzkohlenreste und Asche entfernt.

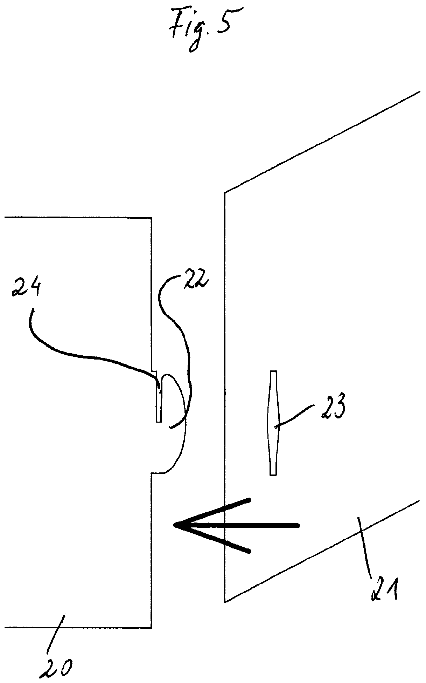

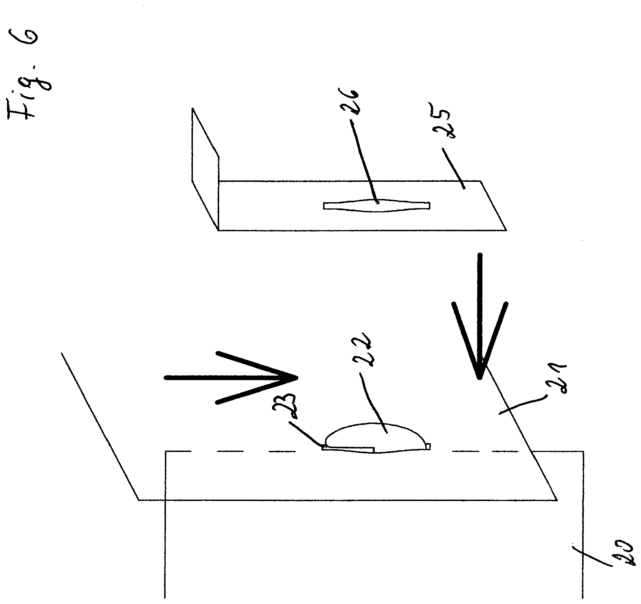

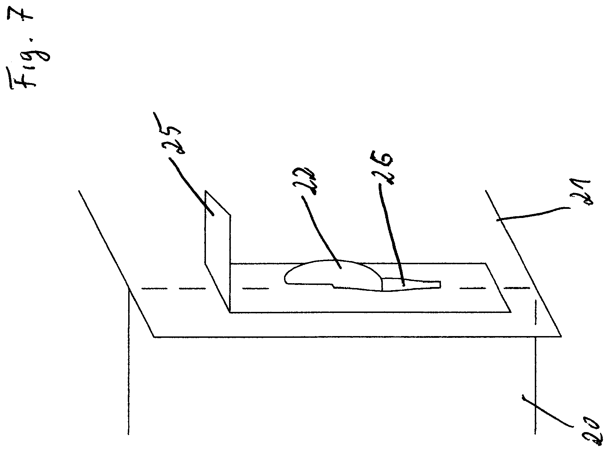

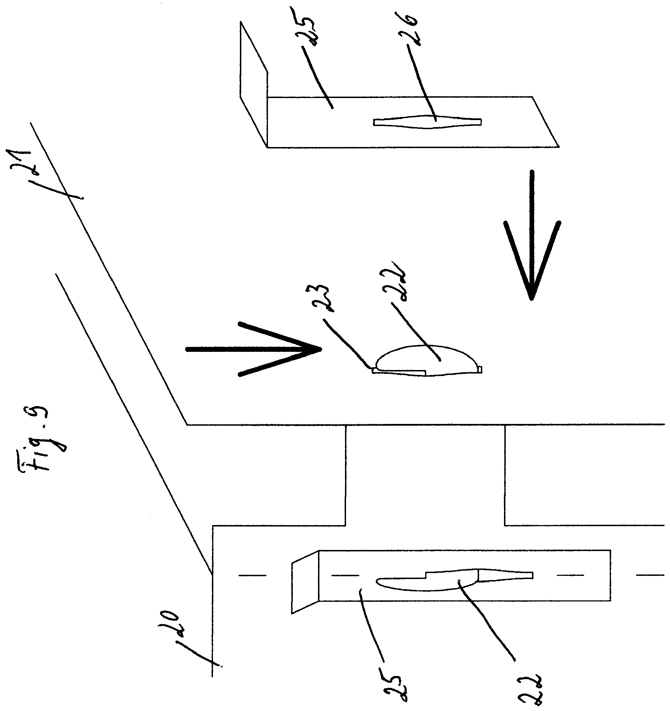

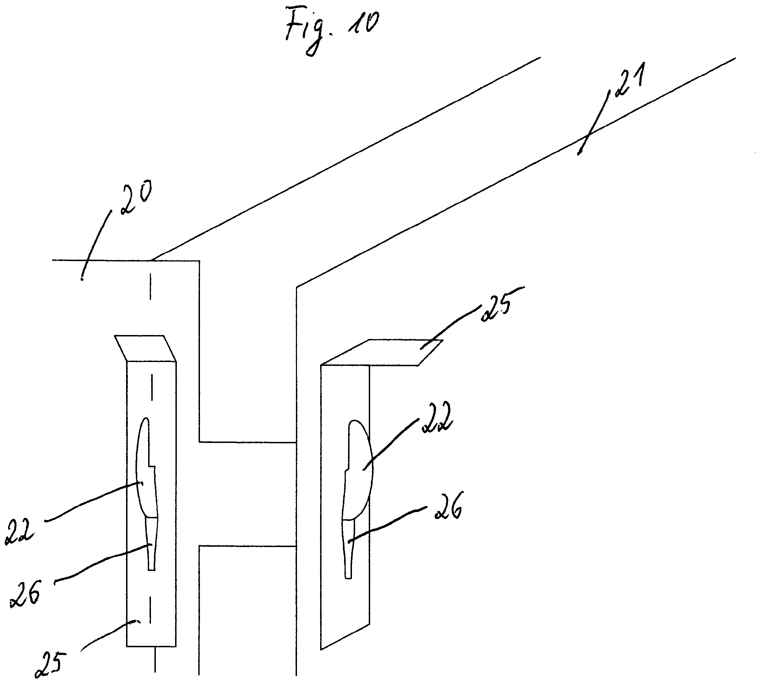

Die Figuren 5 bis 10 zeigen das Prinzip des Zusammenbaus und des Auseinandernehmens von einzelnen Teilen der erfindungsgemäßen Grillvorrichtung. Dabei erfolgt die Verbindung der einzelnen Teile der Grillvorrichtung nach dem jeweils gleichen Prinzip. An einem ersten Blechteil 20 befindet sich eine Lasche 22, während an einem zweiten Blechteil 21 ein Schlitz 23 vorgesehen ist. Dieser Schlitz 23 ist so ausgebildet, dass das zweite Blechteil 21 auf bzw. in die Lasche 22 gesteckt werden kann. In Figur 5 ist dies mit einem Pfeil schematisch angedeutet. Die Figur 6 zeigt das Zusammenfügen eines ersten 20 und eines zweiten Blechteils 21. Der Schlitz 21 ist bauchig ausgeführt. Neben dem Formschluss wird dabei zusätzlich noch ein Kraftschluss erreicht, wodurch eine stabile Verbindung entsteht. Zusätzlich ist ein Sicherungsblech 25 vorgesehen, welches in eine Nut 24 der Lasche 22 einsteckbar ist.

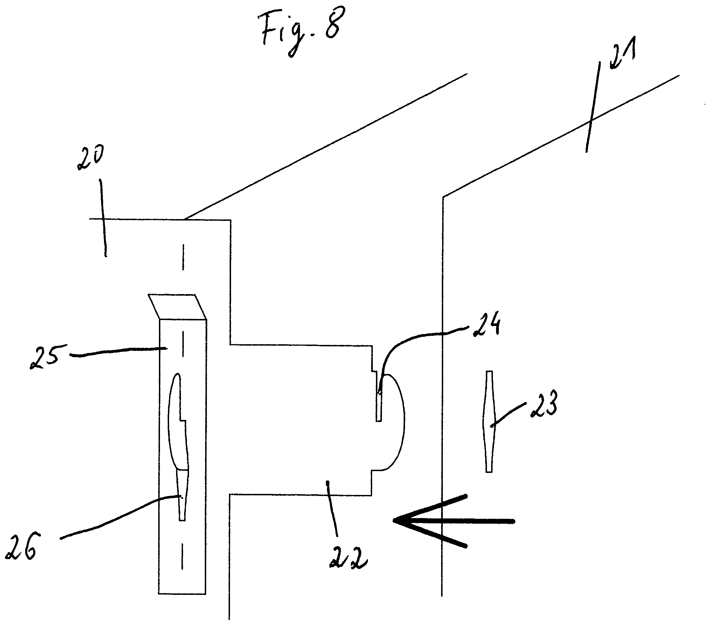

Die Grillvorrichtung besteht aus Blechteilen 20, 21, die für den bestimmungsgemäßen Gebrauch in der Reihenfolge des Zusammenbaus nummeriert werden. Beispielsweise können diese Teile 45 x 25 cm groß sein. Sie werden sortiert und übereinandergestapelt. Das erste Blechteil 20 liegt jeweils oben und wird, wie beschrieben, mit dem zweiten Blechteil 21 verbunden. Dazu werden die Laschen 22 durch die Schlitze 23 gesteckt. Anschließend wird die Verbindung mit einem Sicherungsblech 25 gesichert und stabilisiert. Die jeweiligen Blechteile besitzen zusätzlich eine untere Abkantung, die der Vorrichtung eine höhere Stabilität verleiht. Das Prinzip der Verbindung der einzelnen Teile der Grillvorrichtung ist dabei immer gleich. Die Figuren 5, 6 und 7 zeigen dabei das formschlüssige Verbinden von 2 senkrecht aufeinander stehenden Blechteilen. Die Figuren 8, 9 und 10 zeigen das formschlüssige Verbinden, wobei ein Luftschacht zwischen den Kamin und den Kaminmantel gebildet wird.

Die Erfindung wurde zuvor anhand eines Ausführungsbeispiels beschrieben. Die Erfindung ist darauf jedoch nicht beschränkt. Die jetzt und mit der Anmeldung später eingereichten Ansprüche sind Versuche zur Formulierung ohne Präjudiz für die Erzielung eines weitergehenden Schutzes.

Die in den abhängigen Ansprüchen angeführten Rückbeziehungen weisen auf die weitere Ausbildung des Gegenstandes des Hauptanspruches durch die Merkmale des jeweiligen Unteranspruches hin. Jedoch sind diese nicht als ein Verzicht auf die Erzielung eines selbständigen, gegenständlichen Schutzes für die Merkmale der rückbezogenen Unteransprüche zu verstehen.

Merkmale, die bislang nur in der Beschreibung offenbart wurden, können im Laufe des Verfahrens als von erfindungswesentlicher Bedeutung, zum Beispiel zur Abgrenzung vom Stand der Technik beansprucht werden.

## Patentansprüche

1. Grillvorrichtung für das direkte Grillen mit Holzkohle oberhalb einer Temperatur von 200 °C Grilltemperatur, bestehend aus einem Gehäuse (1) mit wenigstens einem Mantelkörper (2), der eine als Kamin ausgebildete Brennkammer (3) umschließt und einem Grillraum (4), wobei die Brennkammer (3) und der Grillraum (4) seitlich versetzt nebeneinander in dem Gehäuse (1) angeordnet sind, wobei die Brennkammer (3) seitlich zum Grillraum (4) eine Öffnung (5) aufweist, durch die die Wärmestrahlung und das Rauchgas der verbrennenden Holzkohle (6) durch den Grillraum (4) so geleitet werden, dass Wärmestrahlung und Rauchgas über einen Grillrost (7), der den Grillraum (4) abdeckt, nach oben abgeleitet werden.

2. Grillvorrichtung nach Anspruch 1, **dadurch gekennzeichnet, dass** der Grillraum (4) in Betriebsstellung im Gehäuse (1) zumindest teilweise höher angeordnet ist als die Brennkammer (3).

3. Grillvorrichtung nach einem der Ansprüche 1 bis 2, **dadurch gekennzeichnet, dass** die Brennkammer (3) mit einer unteren Luftzufuhr (8) und einer oberen Luftzufuhr (9) ausgebildet ist, wobei bevorzugt die obere Luftzufuhr (9) zwischen dem Mantelkörper (2) und der Brennkammer (3) vorgesehen ist und wobei die obere Luftzuführungsöffnung (9/1) auf der in Betriebsstellung oberen Seite des Mantelkörpers (2) angeordnet ist.

4. Grillvorrichtung nach einem der Anspruch 3, **dadurch gekennzeichnet, dass** die obere Luftzufuhr (9) im unteren Bereich in die Brennkammer (3) geführt ist, so dass die obere Zuluft (OZ) um die Brennkammer (3) geführt und dabei erwärmt wird.

5. Grillvorrichtung nach einem der Ansprüche 3 bis 4, **dadurch gekennzeichnet, dass** die obere Luftzuführungsöffnung (9/1) als Schieber oder Klappe ausgebildet ist und/oder die untere Luftzufuhr (8) seitlich unten, in Höhe des unteren Kamin- bzw. Brennkammerbodens (3/1) bzw. leicht darüber an dem Mantelkörper (2) angeordnet ist.

6. Grillvorrichtung nach einem der Ansprüche 3 bis 5, **dadurch gekennzeichnet, dass** die untere Luftzufuhr (8) in die obere Luftzufuhr (9) mündet, so dass beide in die Brennluftzufuhr (10) münden und/oder die untere Luftzufuhr (8) eine als Schieber oder Klappe ausgebildete Luftzuführungsöffnung (8/1) aufweist, die am Mantelkörper (2) angeordnet ist.

7. Grillvorrichtung nach einem der vorhergehenden Ansprüche, **dadurch gekennzeichnet, dass** der Boden (4/1) des Grillraums (4) von der Brennkammer (3) her seitlich abfallend ist.

8. Grillvorrichtung nach einem der vorhergehenden Ansprüche, **dadurch gekennzeichnet, dass** der Boden (4/1) des Grillraums (4) wenigstens eine vorzugsweise verschließbare Abflussöffnung (4/2) für abgetropfte Flüssigkeit aufweist.

9. Grillvorrichtung nach einem der vorhergehenden Ansprüche, **dadurch gekennzeichnet, dass** sich die Öffnung (5) zur Führung der Wärmestrahlung und des Rauchgases auf der dem Grillraum (4) zugewandten Seite etwa ab der Mitte bis zur oberen Begrenzung der Brennkammer (3) erstreckt, bevorzugt in ihrer Abmaßen den Abmaßen des Brennraums entspricht und/oder ein Schieber (12) in der Öffnung (5) vorgesehen ist, um den Abzug von Wärmestrahlung und Rauchgas zu begrenzen.

10. Grillvorrichtung nach einem der vorhergehenden Ansprüche, **dadurch gekennzeichnet, dass** die Brennluftzufuhr (10) sich auf der von dem Grillraum (4) abgewandten Seite befindet, wobei der untere Kamin- bzw. Brennkammerboden (3/1) im Bereich der Brennluftzufuhr (10) nach oben abgewinkelt ist.

11. Grillvorrichtung nach einem der vorhergehenden Ansprüche, **dadurch gekennzeichnet, dass** an der oberen Begrenzung der Brennluftzufuhr (10) eine sich bis in den Brennraum (3) hinein erstreckende Abwinklung als Kohleauflageblech bzw. oberer Kamin- bzw. Brennkammerboden (3/2) vorgesehen ist und/oder der obere Kamin- bzw. Brennkammerboden (3/2) Luftzufuhröffnungen aufweist bzw. als Lochblech ausgebildet ist und/oder ein einschieb- und herausnehmbares Einfüllblech (11) vorgesehen ist.

12. Grillvorrichtung nach einem der vorhergehenden Ansprüche, **dadurch gekennzeichnet, dass** die Grillvorrichtung aus Einzelteilen gebildet ist, die formschlüssig zusammensetzbar und auseinandernehmbar sind.

13. Grillvorrichtung nach Anspruch 12, **dadurch gekennzeichnet, dass** als Einzelteile flächige erste Blechteile (20) und zweite Blechteile (21) vorgesehen sind, die in montiertem Zustand rechtwinklig zueinander stehen und die ersten Blechteile (20) in regelmäßigen Abständen Laschen (22) aufweisen, die in Schlitze (23) eines zu verbindenden zweiten Bleches (21) einsteckbar sind.

14. Grillvorrichtung nach einem der vorhergehenden Ansprüche 12 oder 13, **dadurch gekennzeichnet, dass** der Formschluss dadurch erreicht wird, dass an der Lasche (22) in Höhe des zu verbindenden zweiten Bleches (21) eine Nut (24) vorgesehen ist, die in etwa genauso ausgeführt ist, wie die Blechstärke des zweiten Bleches (21).

15. Grillvorrichtung nach einem der vorhergehenden Ansprüche 12 bis 14, **dadurch gekennzeichnet, dass** die Schlitze (23) bauchig ausgeführt sind und/oder die Lasche (22) des ersten Bleches (20) als Haken vorgesehen ist, in welchen ein Sicherungsblech (25) einhängbar ist.
